# EUROPEAN PATENT APPLICATION

(11) **EP 4 803 218 A1**
(43) Date of publication of application: **09.09.2026**
(21) Application number: 25209111.1
(22) Date of filing: 16.10.2025
(51) Int. Cl.: B09C 1/08, B09C 1/00, B09C 1/10, C02F 1/32, C02F 1/72, C02F 1/78, C02F 9/00

(54) **SYSTEM AND METHOD FOR WATER TREATMENT AND SOIL REMEDIATION USING HIGH-PRESSURE AND HIGH CONCENTRATION DISSOLVED OZONE**

(30) Priority: 17.10.2024 US 202418918487
(71) Applicant: L'AIR LIQUIDE, SOCIETE ANONYME POUR L'ETUDE ET L'EXPLOITATION DES PROCEDES GEORGES CLAUDE, 75007 Paris (FR)
(72) Inventor: MAHMUDOV, Rovshan, Newark, 19702 (US); MANTE, Jan, 47805 Krefeld (DE)
(74) Representative: Air Liquide

(57) **Abstract**

A method for purification of a water, groundwater and/or soil contaminated with organic impurities comprises steps of injecting an ozone-saturated water into the contaminated water and oxidizing the contaminants by the ozone-saturated water in combination with other purification methods.

## Description

### Field of the Invention

The present invention relates to a method for oxidation of organic contaminants in various water sources including municipal and industrial wastewater, storm water, and graywater for water reuse and for groundwater remediation at sites contaminated with hazardous organic compounds. The remediation process may be performed in-situ or as pump-and-treat or as a combination of thereof.

### Background

Ozone is widely used in water and wastewater treatment systems for oxidation of unwanted impurities and disinfection of pathogenic microorganisms. The main shortcoming of conventional ozonation, however, is that it does not oxidize organic impurities to completion leaving partially oxidized byproducts. However, in many water reuse systems a complete removal of organic contaminants is needed. Current water treatment systems for wastewater recycle utilize complex treatment trains that include, but not limited to coagulation/sedimentation, biological treatment, mechanical filtration, and disinfection. These treatment processes cannot achieve a desired level of removal of organic contaminants required for water reuse applications and require downstream treatment such as advanced oxidation, reverse osmosis, activated carbon adsorption, ion exchange or combinations of thereof.

For groundwater remediation, ozone treatment is normally carried out by injecting O₂/O₃ gas mixture (10% / 90% mass ratio) directly into groundwater using bubble diffusers. The main disadvantage of this method is that some of the gas that is mostly oxygen with some amount of ozone remains unreacted and percolates upward through media carrying some of volatile and semivolatile organic compounds (VOC and SVOC) trapped in the subsurface media and may cause atmospheric pollution.

The oxidants used for the oxidation of contaminates in the saturated zone include hydrogen peroxide (H₂O₂), persulfate (S₂O₈²⁻), and permanganate (MnO⁴⁻). Hydrogen peroxide and persulfate may be activated by Fe²⁺ to form hydroxyl radicals (OH*) and persulfate radicals (SO₄^{*-}).

The remediation of sites contaminated with hazardous organic compounds is a long and expensive process that may take up to 7 to 10 years to complete. The better remediation results have been achieved with combined cleanup technologies such as pump-and-treat followed, for example, by *in situ* bioremediation or monitored natural attenuation.

Ozone-based advanced oxidation is a process in which ozone is combined with other techniques such as H₂O₂, UV light, metal catalysts, ultrasound to generate of hydroxyl radicals, very powerful oxidation agent. The ozone-based advanced oxidation processes (AOPs) have been proved to be effective in oxidizing a wide range of effluents containing recalcitrant organics (Gracia, Aragües & Ovelleiro 1996; Piera et al. 2000; Cortés et al. 2000, Kasprzyk-Hordern, Zió 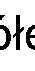 ek & Nawrocki 2003; Rekhate & Srivastava, 2020). Additionally, Ozone -based AOPs can significantly improve total organic carbon (TOC) removal and lower ozone dose (Gracia, Aragües & Ovelleiro 1998; Cortés et al. 2000).

Hydrogen peroxide and UV when combined with ozone have been used to generate hydroxyl radicals and to enhance the oxidation of ozone-refractive organic compounds and TOC removal (Chen et al. 2015; Hansen et al. 2016; Lee et al. 2016; Tokumura et al. 2016). It has been reported that O₃/H₂O₂ is generally more energy efficient than UV/H₂O₂ process (Lee et al. 2016). However, the former has a greater potential for generation of undesirable byproducts such as bromate and N-Nitrosodimethylamine (NDMA).

US 6312605 B1 discloses a groundwater remediation process by injecting ozone via a microdiffuser located in the injection well. The process also features a compressor for pushing ozonated gas into the well. Similarly, US 6582611 B1 utilizes ozone/oxygen or ozone/air gas mixture injected into groundwater and underground aquifer for the oxidation of organic contaminants.

US 2017/0333959 A1 discloses a compressor to pressurize ozone/oxygen mixture to 500 psi before injecting into deep water well of up to 1100 feet for the oxidation of SVOC and VOC.

US 2012048812 A1 discloses a process where ozone-containing gas is injected into groundwater along with potassium hydroxide to generate hydroxyl radicals.

In US7887762 B1 ozone gas is first pressurized in a pulse storage tank before injecting ozone into groundwater. Valves controlled by a programmable pressure controller open to deliver ozone to an injection point and close to repressurize the tank.

### Summary

There is disclosed a method for purifying a contaminated groundwater and soil by destroying contaminants or reducing concentrations of the contaminants, the method comprising the steps of:
providing a flow of groundwater flowing through a contaminated region of the contaminated groundwater and soil;
providing at least one first injection points to the flow of the groundwater upstream of the contaminated region, wherein the at least one first injection points extend substantially perpendicularly to the flow of the groundwater from above ground to the flow of the groundwater;
generating an ozone-saturated water in an on-site vessel;
injecting the ozone-saturated water from the at least one first injection points into the flow of groundwater, wherein the ozone-saturated water is driven by the flow of the underground water and flows into the contaminated region; and
oxidizing the contaminants contained in the contaminated region by the ozone-saturated water.

In some embodiments, the method further comprising the steps of
providing at least one first pump points downstream of the contaminated region, wherein the at least one first pump points extend substantially perpendicularly to the flow of the groundwater from above ground to the flow of the groundwater; and
pumping water from the downstream of the contaminated region from the at least one first pump points to the on-site vessel, thereby recycling unused ozone back to the on-site vessel.

In some embodiments, the method further comprising the steps of
providing at least one biological treatment systems downstream of the at least one first pump points; and
destroying byproducts produced by the oxidization step through at least one biological treatment systems downstream of the at least one first pump points.

In some embodiments, the method further comprising the steps of
providing at least one second injection points to the downstream of the at least one biological treatment systems; and
injecting the ozone-saturated water from the at least one second injection points into the downstream of the at least one biological treatment system for disinfection treatment,
wherein the at least one second injection points extend substantially perpendicularly to the flow of the groundwater from above ground to the flow of the groundwater.

In some embodiments, the byproducts include partially oxidized or unreacted compounds from the contaminated region.

In some embodiments, the byproducts include partially oxidized or unreacted compounds from the original contaminated region or water.

In some embodiments, the method further comprising the step of:
injecting a hydrogen peroxide solution to the ozone saturated water before injecting the ozone-saturated water from the at least one first injection points into the flow of groundwater, wherein a concentration of the hydrogen peroxide solution is approximately 30%.

In some embodiments, a ratio of hydrogen peroxide to ozone in water is in the range from 1:10 to 1:2 g/g.

In some embodiments, the pressure of the ozone-saturated water generated form the on-site vessel is up to 8 barg.

In some embodiments, the pressure of the ozone-saturated water generated form the on-site vessel is up to 6 barg.

In some embodiments, the pressure of the ozone-saturated water generated form the on-site vessel ranges from 1 to 8 barg.

In some embodiments, the concentration of the ozone-saturated water generated form the on-site vessel ranges is up to approximately 300 mg/L.

There is disclosed a method for purification of a process liquid contaminated with organic impurities in water recycle and reuse systems to destroy contaminants or reduce concentrations of contaminants, the method comprising:
providing a water stream upstream of a contaminated water;
generating an ozone-saturated water in an on-site vessel;
adding the ozone-saturated water to the contaminated water;
oxidizing the contaminants contained in the contaminated water,
wherein the ozone-saturated water is driven by the water stream and flows into the contaminated water to oxidize the contaminants.

In some embodiments, the process liquid is effluent water, municipal and industrial wastewater, contaminated stormwater and wastewater already treated by the secondary treatment process.

In some embodiments, the method further comprising the step of:
adding a hydrogen peroxide solution to the contaminated water immediately after the oxidization step, wherein a concentration of the hydrogen peroxide solution is approximately 30%.

In some embodiments, a ratio of hydrogen peroxide to ozone in water is in the range from 1:10 to 1:2 g/g.

In some embodiments, the method further comprising the step of:
applying a UV light in a wavelength ranging from 250 to 350 nm to the contaminated water after the oxidization step.

In some embodiments, the method further comprising the step of:
pumping water from downstream of the contaminated water to the on-site vessel, thereby recycling unused ozone back to the on-site vessel.

In some embodiments, the method further comprising the steps of:
providing at least one biological treatment systems downstream of the contaminated water; and
destroying byproducts after treatment by the ozone-saturated water; and
injecting the ozone-saturated water into the downstream of the at least one biological treatment system for disinfection treatment.

In some embodiments, the pressure of the ozone-saturated water generated form the on-site vessel is up to 8 barg.

In some embodiments, the pressure of the ozone-saturated water generated form the on-site vessel is up to 6 barg.

In some embodiments, the pressure of the ozone-saturated water generated form the on-site vessel ranges from 1 to 8 barg.

In some embodiments, a concentration of the ozone-saturated water generated form the on-site vessel is up to approximately 300 mg/L.

There is disclosed a mothed for remediating a contaminated groundwater and soil by destroying contaminants or reducing concentrations of the contaminants, the method comprising the steps of:
providing a flow of groundwater flowing through a contaminated region of the contaminated groundwater and soil;
providing at least one first injection points extending substantially perpendicularly to the ground from above ground to the flow of groundwater upstream of the contaminated region;
generating an ozone-saturated water in an on-site vessel;
injecting the ozone-saturated water from the on-site vessel through the at least one first injection points into the flow of groundwater, wherein the ozone-saturated water is driven by the flow of the groundwater and flows into the contaminated region;
adding a solution of hydrogen peroxide into the ozone-saturate water before the ozone-saturated water is injected into the at least one first injection points, wherein a concentration of the hydrogen peroxide solution is approximately 30%;
oxidizing the contaminants contained in the contaminated region;
installing at least one biological treatment systems downstream of the contaminated region to destroy byproducts created by the oxidization step;
pumping water downstream of the at least one biological treatment systems to the on-site vessel through at least one first pumping points, thereby recycling unused ozone back to the on-site vessel, wherein the at least one first pumping points extend substantially perpendicularly to the ground from above ground to the downstream of the at least one biological treatment systems; and
applying UV light in a wavelength ranging from 250 to 350 nm to the on-site vessel for further purification.

There is disclosed a method for purification of a process liquid contaminated with organic impurities in water recycle and reuse systems to destroy contaminants or reduce concentrations of contaminants, the method comprising:
forming a water recirculation loop with a pressurized vessel, wherein the process liquid in the pressurized vessel flows out of the pressurized vessel and recycles back to the pressurized vessel by pumping, the pressurized vessel has a pressure up to 8 barg;
generating ozone-saturated water in the pressurized vessel;
adding a solution of hydrogen peroxide to the water recirculation loop, wherein a concentration of the hydrogen peroxide solution is approximately 30%;
adding a UV light to the water recirculation loop, wherein the UV light has a wavelength ranging from 250 to 350 nm;
oxidizing the organic impurities in the process liquid by the combination of ozone-saturated water, hydrogen peroxide and UV light.

In some embodiments, the process liquid is effluent water, municipal and industrial wastewater, contaminated stormwater and wastewater already treated by the secondary treatment process.

### Brief Description of the Drawings

For a further understanding of the nature and objects of the present invention, reference should be made to the following detailed description, taken in conjunction with the accompanying drawings, in which like elements are given the same or analogous reference numbers and wherein:
**FIG.** 1 shows a block flow diagram of an exemplary embodiment of a system for groundwater and soil remediation;
**FIG. 2** shows a block diagram of another exemplary embodiment of a system for groundwater and soil remediation;
**FIG. 3a** shows a block diagram for an exemplary wastewater treatment in water recycling system;
**FIG. 3b** shows a block diagram for another exemplary wastewater treatment in water recycling system;
**FIG. 4** shows succinic acid oxidation with ozone and hydrogen peroxide;
**FIG. 5** shows total organic carbon removal using ozone and hydrogen peroxide;
**FIG. 6** shows the oxidation of succinic acid and COD removal by ozone at various water pH values; and
**FIG. 7** shows the oxidation of succinic acid and COD removal by ozone at various water pH values.

### Description of Preferred Embodiments

Disclosed are systems and methods for treatment of wastewater for reuse and remediation of groundwater and soil at contaminated sites by ozone based advanced oxidation process (AOPs) or by a combination of ozone-based AOP and conventional water treatment processes such as filtration and biological treatments. The ozone based advanced oxidation process (AOP) may use ozone-saturated water or high-pressure and high concentration dissolved ozone in combination with hydrogen peroxide and UV light.

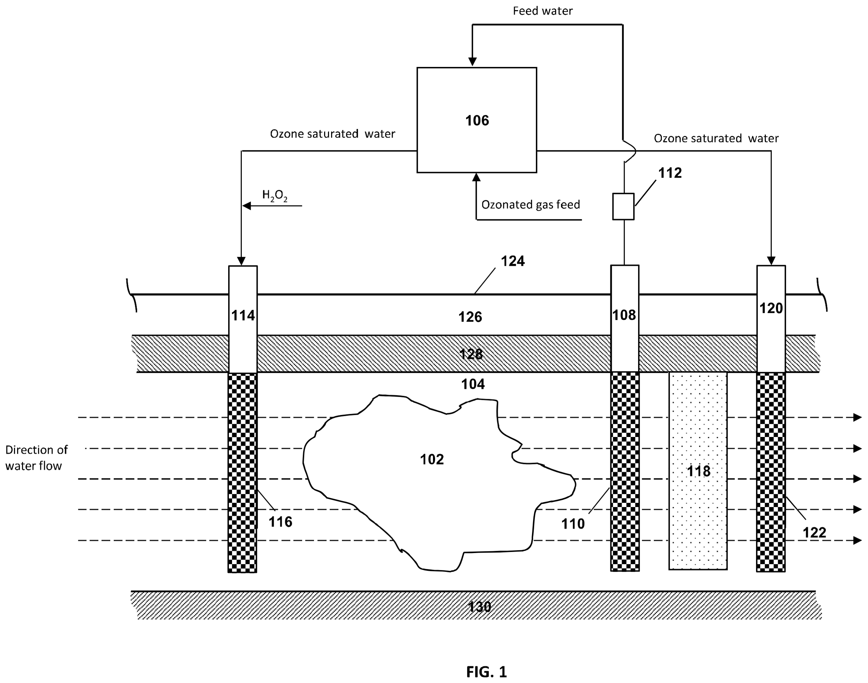

More specifically, the disclosed are methods for purification of water contaminated or impacted with organic impurities and total organic carbon (TOC) removal by ozone-based AOPs by first generating an ozone-saturated water with the concentration of ozone of up to 300 mg/L. In the disclosed method, the impacted water enters a reactor for generation of the ozone-saturated water and is recirculated in an external loop as shown in **FIG. 1** to **FIG. 3b****.** Dissolved ozone is injected into the recirculating water via a Venturi injector (not shown) until an ozone concentration in the water reaches a required concentration or from 100 to 300 mg/L. Organic impurities are partially oxidized during this process. Additionally, the ozone-saturated water may be combined with H₂O₂ solution and/or UV light in a wavelength ranging from 250 to 350 nm to achieve TOC removal.

The disclosed methods may be used for both treatment of contaminated water for water reuse/recycle systems, such as industrial contaminated wastewaters and municipal wastewater, and purification of a contaminated region of a subterranean body of water and soil to destroy or reduce concentrations of contaminants. The disclosed methods may be used for treatment of a process liquid or a process water, which may be effluent water, municipal and industrial wastewater, contaminated stormwater, wastewater already treated by the secondary treatment process, or the like.

The disclosed methods may achieve near complete oxidation of organic impurities and water disinfection in water reuse/recycle systems with limited amount of waste produced where conventional wastewater treatment system fails to achieve the required level of removal of organic impurities. Examples of such systems are oxidation of organics in municipal or industrial wastewater in water reuse/recycle system and groundwater and soil remediation at sites contaminated with hazardous compounds or hazardous organic compounds. Groups of compounds that may be destroyed by the disclosed methods and processes include persistent organic substances such as pharmaceuticals and personal care products, pesticides, biocides, and others.

The disclosed systems generate ozone-saturated water that may be used for the remediation of contaminated region of a subterranean body of groundwater and soil to destroy or reduce levels of contaminants. The disclosed method may be applied to treatments of industrial contaminated wastewaters and municipal wastewater for water reuse and recycle applications.

The hazardous compounds or contaminants include but not limited to organic compounds, chlorinated organic compounds, polychlorinated biphenyls (PCBs), polyaromatic hydrocarbons (PAHs), dioxins, pesticides, explosives, etc. The remediation process using an ozone-based technology is performed *in-situ* by injecting ozone saturated water directly into the ground water in the saturated zone or *ex-situ by* a pump-and-treat process, or a combination thereof. The disclosed methods and processes remediate the soil contaminated with the hazardous compounds in-situ by oxidizing the hazardous compounds, such as organics attached to the soil. In some embodiments, the ozone-saturated water is injected into the groundwater in a saturated zone at the site where soil is contaminated with the hazardous compounds. The ozone-saturated water and groundwater are mixed together in the saturated zone under the ground, which allows the ozone-saturated water to pass through the mixture of the groundwater and soil.

Here, the ozone-saturated water is a pressurized dissolved ozone saturated water. The pressurized dissolved ozone saturated water has a pressure of up to 8 barg, preferably, up to 6 barg, and ozone concentration of up to approximately 300 mg/L. The pressurized dissolved ozone saturated water is injected into a saturated zone through injection-wells and then flows through a contaminated region of a subterranean body of groundwater, a subterranean body of groundwater and soil or a bed of soil contaminated with hazardous compounds or organic contaminants. Ozone is a strong oxidation agent and capable of oxidizing a wide range of organic compounds. Some organic compounds are oxidized completely by ozone to CO₂, but this generally accounts for only a small portion of the total organic carbon. Therefore, the groundwater downstream of the contaminated site after the ozone treatment contains multiple compounds including the oxidation by-products of ozone reaction with partially oxidized hazardous organic compounds. The groundwater either upstream or downstream of the contaminated site is pumped from a draw-well and fed to an ozone-saturated water generation system described in US 10,858,271 B2 the full disclosure of which is incorporated herein by reference. Under appropriate operating conditions, by feeding an ozonated gas to the ozone saturated water generation system, the system allows reaching a dissolved ozone concentration in water of up to ~300 mg/L with a pressure of up to 8 barg, preferably up to 6 barg. Under these ozone saturated water conditions, the contaminants in the wastewater, groundwater, and/or soil are quickly destroyed. The purified groundwater downstream of the contaminated zone may contain a high concentration of dissolved ozone at high pressure, which may be recycled, pumped back or recirculated to the ozone saturated water generation system, re-injected into the groundwater stream through the injection-wells and mixed with the contaminated groundwater and soil for further remediation.

The partially oxidized hazardous organic compounds contained in the groundwater downstream of the contaminated zone may be further removed by biological process downstream of the contamination zone. When ozone reacts with organic compounds and oxidizes them, the ozone oxidation byproducts generally have lower toxicity than the parent compounds. Furthermore, the partially oxidized hazardous organic compounds are more soluble in water and easily carried out from contaminated soil media. Both these factors facilitate subsequent in-situ biological treatment of the contaminated groundwater.

The disclosed methods provide efficient systems for groundwater and/or soil remediation as well as wastewater and drinking water treatments as well. To the best of our knowledge, this is the first time to apply such high-pressure dissolved ozone to groundwater and/or soil remediation. The systems disclosed herein achieve dual treatment effects: i) recalcitrant organic compounds are destroyed ex-situ in the high-pressure and high-ozone concentration system and ii) effluent water from the ozone saturated water generation system containing high ozone concentration up to 300 mg/L at pressures up to 8 barg, preferably up to 6 barg is injected into groundwater for in-situ groundwater and/or soil treatment. Such systems combined with other treatment options such as biological treatment and/or reverse osmosis (RO) and/or UV treatment may also be used for the treatment of wastewater for reuse in water recycle systems.

The benefits of the disclosed systems include more efficient groundwater and soil treatment compared to existing treatment systems. Ozone is much stronger oxidation agent than other oxidants used in groundwater and soil remediation and drinking water treatment. When ozone gas injected into the groundwater, gas-liquid mass transfer often limits the treatment efficiency. This is especially a problem when ozone gas is injected into groundwater where limited methods are available to improve the mass transfer. The injection of ozone dissolved in water at high pressure disclosed herein eliminates the mass transfer step, thereby improving reaction kinetics. In combination of these factors may lead to more efficient and faster oxidation of groundwater and soil contaminants. In addition, the injection of the ozone-saturated water into the contaminated groundwater and soil has advantages compared to an injection of ozone gas. The bubbling of the ozone gas that contains 10% ozone and 90% oxygen creates a condition when the unreacted gas moves through a medium in an upward direction. In this case, the volatile organics and leftover ozone may escape to atmosphere.

**FIG. 1** is a block diagram of an exemplary embodiment of a system for groundwater and soil remediation, in which contaminated zone **102** in saturated zone **104** is treated by an ozone-saturated water generated from high pressure ozonation reactor **106** described in US 10858271 and US 10851000 and the full disclosure of which are incorporated herein by reference. More specifically, high pressure ozonation reactor **106** is a pressurized reactor in which the ozone-saturated water is produced. The pressure of the reactor may be up to 8 barg. A pressure of the ozone-saturated water generated from high pressure ozonation reactor **106** may be up to 8 barg, preferably 6 barg. Contaminated zone **102** may be a body of groundwater or a body of soil saturated with groundwater contaminated with hazardous compounds or organic contaminants. The hazardous compounds or organic contaminants including chlorinated compounds, polychlorinated biphenyls (PCBs), polyaromatic hydrocarbons (PAHs), dioxins, pesticides, or explosives, etc. The groundwater in contaminated zone **102** and downstream of contaminated zone **102** may contain the organic contaminants dissolved in water. Regarding highly hydrophobic contaminates that do not dissolved in water, they may be absorbed on the surface of the soil. If a body of contaminated soil having the hazardous compounds or organic contaminants absorbed on the surface of the soil, the contaminated soil may alternatively be excavated from the ground and moves to a treatment site to treat with the ozone-saturated water.

Saturated zone **104** is between capillary fringe layer **128** and impermeable layer **130** below unsaturated zone **126** under ground **124.** Feed water drawn from draw-well **108** and ozonated gas containing a mixture of oxygen and ozone are fed to high pressure ozonation reactor **106** where the ozone-saturated water is generated. The lower portion **110** of draw-well **108** buried in saturated zone **104** is made of a porous or mashed material that allows water sucking into draw-well **108** from saturated zone 104. The feed water drawn from draw-well **108** may be filtered by filter **112** and then pressurized (not shown) before sending to high pressure ozonation reactor 106. High pressure ozonation reactor **106** is a pressurized vessel having a high pressure ranging from approximately 1 barg to approximately 3-10 barg. The ozone-saturated water generated from high pressure ozonation reactor **106** has an ozone concentration of up to approximately 300 mg/L and a pressure of up to 8 barg, preferably up to 6 barg. Filter **112** may be a sand filter, a membrane filtration, or the like. Draw-well **108** extends perpendicularly to the water flow of the groundwater from above ground to downstream of contaminated zone **102.** In this case, the feed water drawn from draw-well **108** is a water stream of downstream of contaminated zone **102** that may contain a high concentration of dissolved ozone with high pressure, partially oxidized organics and oxidization byproducts, described below.

The ozone-saturated water generated from high pressure ozonation reactor **106** is delivered to injection-well **114** that extends perpendicularly to the water flow of the groundwater from above ground to upstream of contaminated zone **102.** Lower portion **116** of injection-well **114** buried in saturated zone **104** is also made of a porous or mashed material that allows the ozone-saturated water injecting into upstream of contaminated zone **102.** Injection-well **114** and draw-well **108** are substantially parallel and are the same types of well. The disclosed system for groundwater and soil remediation may include more than one injection-well **114** and/or more than one draw-well **108,** depending on the size of contaminated zone **102** and the amount of the ozone-saturated water required. The ozone-saturate water coming out of injection-well **114** mixes with a water flow (shown in **FIG. 1** from left to right) and flows to contaminated zone **102,** where the ozone-saturated water mixes with the contaminated groundwater and oxidizes the organic contaminants in-situ as it passes through contaminated zone **102.** In particular, ozone dissolved in the ozone-saturated water oxidizes the organic contaminants. In case the oxidation of the organic contaminants is incomplete and not all ozone is consumed in contaminated zone **102,** the groundwater downstream of contaminated zone **102** may contain dissolved ozone, partially oxidized organics and/or byproducts from the oxidization. The partially oxidized organics and/or byproducts may be treated by biological treatment system **118** for treatment. Thus, one or more biological treatment systems **118** may be placed downstream of draw-well **108** for treating the partially oxidized organics and/or byproducts. One or more biological treatment systems **118** may be any commercially available biological treatment systems currently used in water treatment industry. The unused dissolved ozone from contaminated zone **102** may be recirculated back to high pressure ozonation reactor **106** for recycling through draw-well **108.** Draw-well **108** herein i) provides the feed water for high pressure ozonation reactor **106** and ii) recycles the unused dissolved ozone. In order to recycle the unused dissolved ozone well, draw-well **108** is preferred to be placed upstream of biological treatment system **118.** Thus, draw-well **108,** high pressure ozonation reactor **106,** injection-well **114** and contaminated zone **102** form a pump-and-treat loop for a pump-and-treat process in combination with an ozone-based technology - generating the ozone-saturated water - performed an in-situ remediation process. In this way, the groundwater is recirculated for a deep contaminant remove. In some embodiments, draw-well **108** may be placed downstream of biological treatment systems **118.**

Since the biological treatment process may produce some bacteria, pathogens and the like, another injection-well **120** may be placed downstream of biological treatment systems **118** to inject the ozone-saturated water to the treated groundwater from biological treatment systems **118** for further disinfection treatment. Injection-well **120** extends perpendicularly to the water flow of the groundwater from above ground to downstream of contaminated zone **102.** Injection-well **120** may be an exact copy of injection-well **114** in which the lower portion of injection-well **120** is also made of a porous or meshed material. The ozone-saturated water injected through injection-well **120** may also destroy remaining organic contaminants and the byproducts from the oxidation. Thus, the treated groundwater passing injection-well **120** has less to no contamination.

The ozone-saturated water injected into injection-well **120** is much less than the ozone-saturated water injected into injection-well **114.** A ratio of the ozone saturated water drawn from high pressure ozonation reactor **106** to injection-well **114** and to injection-well **120** may be 0.1:10 to preferably 1:10.

In some embodiments, hydrogen peroxide may be applied to the ozone-saturated water for further facilitating the oxidation of ozone refractive compounds, that is, the compounds that do not react easily with ozone. The ozone refractive compounds are compounds that have second order reaction rate constant with ozone less than 1000 mol⁻¹ s⁻¹ such as reaction of hydrogen peroxide (H₂O₂) with ozone in water produces hydroxyl radicals. Hydrogen peroxide may be added to the ozone-saturated water in a range from 0.1:1 to 1:2 mole ratio.

In order to treat the contaminated groundwater more efficiently, hydrogen peroxide may be added to the ozone-saturated water before the ozone-saturated water is delivered to injection well **114.** In this way, hydrogen peroxide may be injected along with the ozone-saturated water to contaminated zone **102** to increase oxidation efficiencies.

In addition, a UV-light (not shown) ranging from 250 to 350 nm may be applied to the ozone-saturated water before the ozone-saturated water is delivered to injection well **114** to produce more hydroxyl radicals for further facilitating the oxidation of the ozone refractive compounds.

In some embodiments, the ozone-saturated water may be combined with the UV light, hydrogen peroxide, or hydroxide ions to enhance the oxidization efficacies as follows:

O₃ + hv + H₂O → H₂O₂ + O₂

H₂O₂ + hv → 2OH* + 2O₂

2O₃ + H₂O₂ → 2OH* + 3O₂

The molar extinction coefficient of ozone is 3300 1/M-cm at 254 mm compared 19.6 1/M-cm for hydrogen peroxide. Therefore, ozone does not have the same limitation as hydrogen peroxide and low pressure low-pressure mercury vapor UV lamps may be used for the generation of hydroxyl radicals from ozone.

Moreover, hydrogen peroxide in excess may act as a hydroxyl radical scavenger, thereby limiting the efficacy of it is use for hydroxyl radical production. Therefore, hydrogen peroxide dosage must be carefully controlled to maximize the generation of hydroxyl radicals without scavenging. In some embodiments, an approximately 30% hydrogen peroxide solution is added to the ozone-saturated water. In some embodiments, the concentration of hydrogen peroxide may be 10 - 30%.

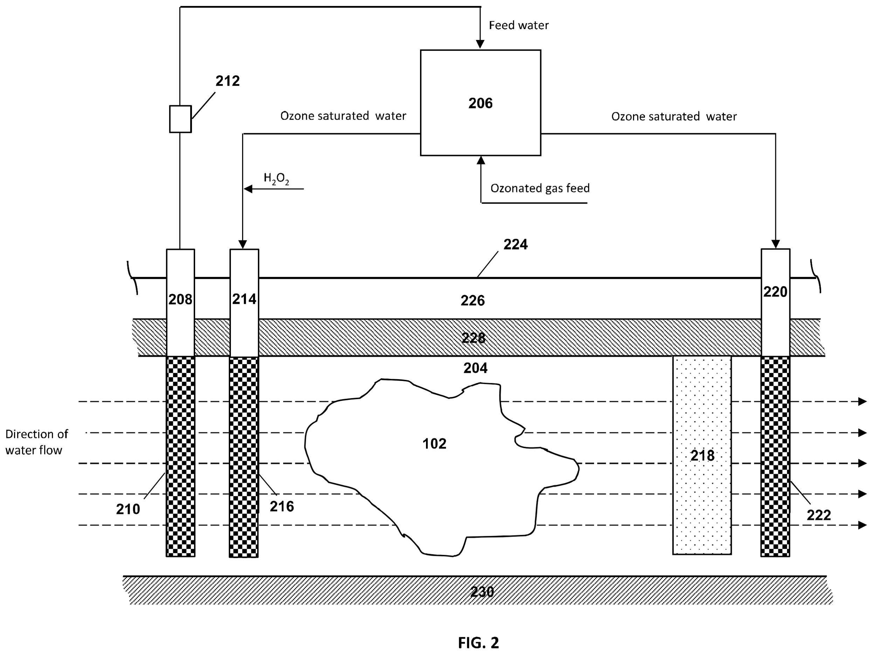

**Fig. 2** is a block diagram of another exemplary embodiment of a system for groundwater and soil remediation. The difference between **FIG. 1** and **FIG. 2** is draw-well **208** for feeding the feed water to high pressure ozonation reactor **206** is placed upstream of injection-well **214** in **FIG. 2****.** That is, draw-well **208** is placed upstream of contaminated zone **202.** In this way, the water fed to high pressure ozonation reactor **206** is a clean water from saturated zone **204** without contamination.

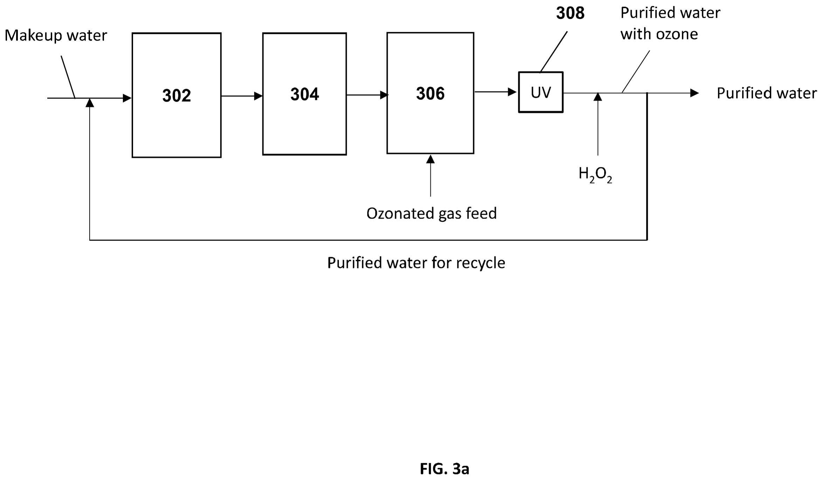

**FIG. 3a** is a block diagrams of an exemplary embodiment for treatment of wastewater for reuse applications, in which source of contaminated water **302** represents a process liquid or a process water, which may be effluent water, municipal and industrial wastewater, contaminated stormwater, wastewater already treated by the secondary treatment process, or the like. Contaminated water **302** undergoes conventional treatment processes **304** carried by a makeup water stream, which may include but not limited to coagulation/sedimentation, biological treatment, and filtration. After conventional treatment processes **304,** the treated contaminated water is fed into high pressure ozonation reactor **306,** where an ozone-saturated water is generated therein. High pressure ozonation reactor **306** is a pressurized vessel having a high pressure ranging from approximately 1 barg to approximately 3-10 barg. The ozone-saturated water generated from high pressure ozonation reactor **306** has an ozone concentration of up to approximately 300 mg/L and a pressure of up to 8 barg, preferably up to 6 barg. The treated contaminated water flows through high pressure ozonation reactor **306** for more complete oxidation of contaminants producing an oxidized water to meet specifications for reuse. Here, upstream of high pressure ozonation reactor **306,** a compressor (not shown) may be installed to pump the treated contaminated water from conventional treatment processes **304** to high pressure ozonation reactor **306.** After that, UV light **308** ranging from 250 to 350 nm is applied to the oxidized water. In addition, H₂O₂ solution may be added to the oxidized water followed by the UV light treatment to maximize the generation of hydroxyl radicals for greater oxidation of organics compared to ozone alone. The resulting purified water may contain leftover ozone dissolved in the purified water. Then the purified water with ozone is recycled back to the makeup water for reuse, forming a treatment loop. Then the purified water is obtained.

In some embodiments, an approximately 30% H₂O₂ solution may be applied.

In some embodiments, an approximately 10 - 30% H₂O₂ solution may be applied.

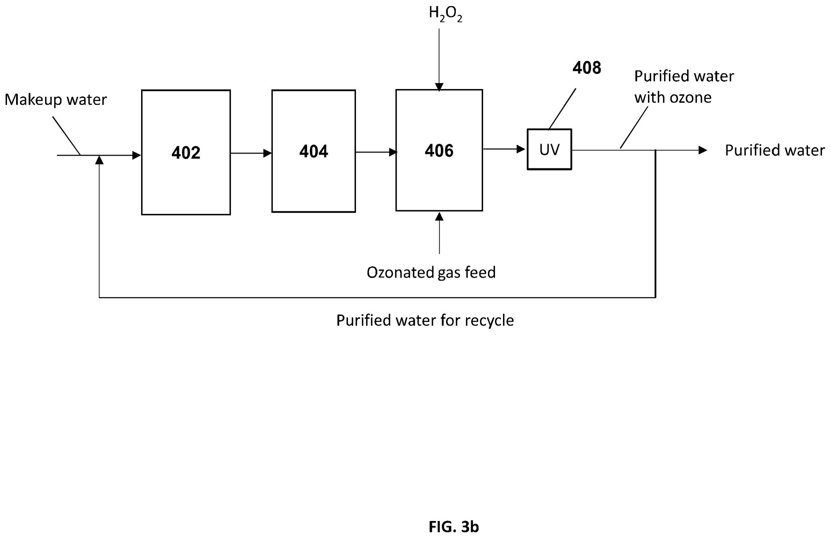

In some embodiments, an approximately 30% H₂O₂ solution may be added to high pressure ozonation reactor **406** to mix with the ozone-saturated water generated therein, as shown in **FIG. 3b****.** The difference between **FIG. 3a** and **FIG. 3b** is the H₂O₂ solution is added to high pressure ozonation reactor **406,** instead of after UV light **408.**

Overall, UV light **308/408** and/or H₂O₂ solution may be added to the treatment loop at various points, for example, before or after high pressure ozonation reactor **306/406.** UV light **308/408** may be applied before or after adding H₂O₂ solution, or vice versa.

In some embodiments, before adding ozone-saturated water into contaminated water, the pH of the contaminated water may be increased to approximately 9 - 11 by adding lime or sodium hydroxide to the contaminated water. Here the contaminated water may include groundwater or soil in the contaminated region, or the contaminated water in water reuse/recycle systems. Examples below show near complete COD removal at water pH values of 9 and above.

### Examples

The following non-limiting examples are provided to further illustrate embodiments of the invention. However, the examples are not intended to be all inclusive and are not intended to limit the scope of the inventions described herein.

The examples below were generated using a succinic acid solution as a representative of a contaminated water that may contain ozone refractive compounds. Succinic acid has very low reaction rates with ozone having a second order rate constant of k₂ = 3.1 x 10⁻² 1/M-s, but reacts very fast with hydroxyl radicals k₂= 3.2 x 10⁸ 1/M-s.

### Example 1

To evaluate the efficiency of the ozone-saturated water from the high pressure system in the degradation of recalcitrant organic compounds, comparison experiments were carried out under atmospheric pressure and high pressure with succinic acid as a model compound to mimic the contaminants using the setup of **FIG. 1****. Table 1** compares the results of the oxidation of succinic acid and COD removal by ozone at atmospheric pressure and at a pressure of 3 barg.

**Table 1. Succinic acid oxidation as a function of ozone dose.**

| Ozonation reactor at atmospheric pressure | | High-pressure ozonation system P = 3 barg | |
|---|---|---|---|
| Ozone dose mgO₃/mg COD | Succinic acid removal efficiency % | Ozone dose mgO₃/mg COD | Succinic acid removal efficiency % |
| 0.26 | 4 | 0.01 | 4 |
| 0.53 | 11 | 0.37 | 15 |
| 0.79 | 18 | 0.82 | 36 |
| 1.32 | 39 | 1.28 | 56 |
| 1.58 | 47 | 1.79 | 71 |
| 2.37 | 59 | 2.26 | 85 |

When comparing succinic acid removal at atmospheric pressure to that at high pressure, it may be seen that the same level of succinic acid oxidation is achieved at 40% less ozone dose under high pressure. Although succinic acid removal was improved in the high pressure ozone-saturated water system, the COD or TOC removal was the same regardless of the pressure. Therefore, the combination of ozone-saturated water with H₂O₂ or UV is needed to achieve significant removal of COD and TOC.

### Example 2

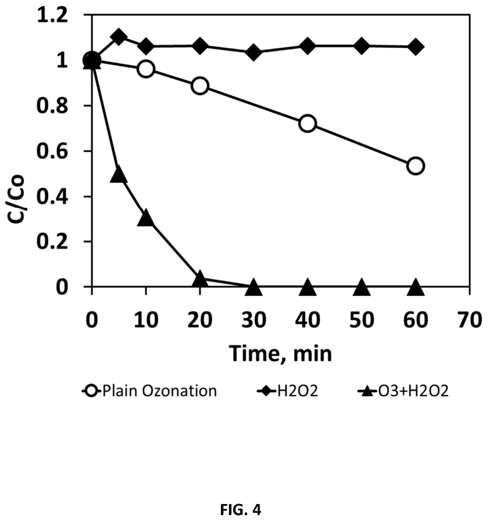

**FIG. 4** shows the oxidation of succinic acid with ozone and hydrogen peroxide treatment under atmospheric pressure. Ozone alone achieved approximately 50% removal of succinic acid, while 100% of succinic acid was removed when ozone and hydrogen peroxide was in combination.

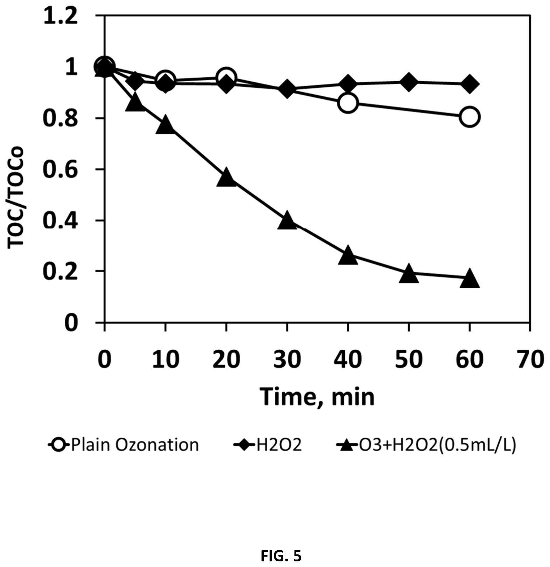

**FIG. 5** shows total organic carbon (TOC) removal using ozone alone and ozone combined with hydrogen peroxide. Ozonation alone removed only 20% TOC within an hour, while ozonation combined with hydrogen peroxide achieved greater than 80% TOC removal during the same time.

### Example 3

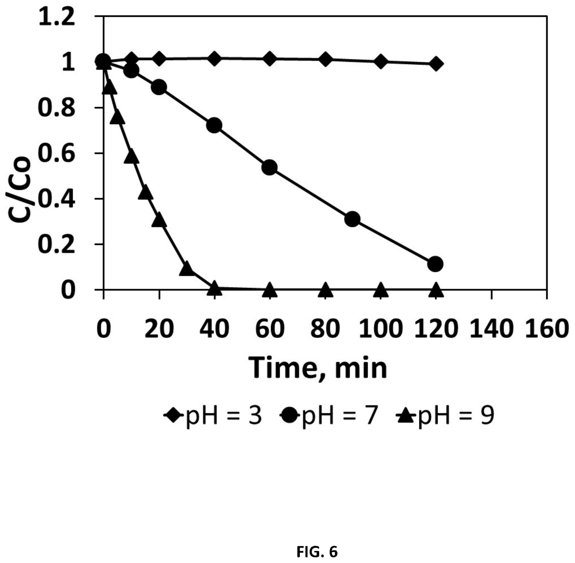

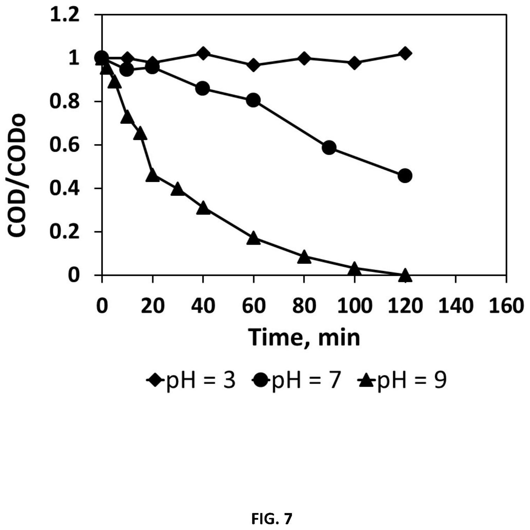

**FIG. 6** **and** **FIG.** 7 show the oxidation of succinic acid and COD removal by ozone in ozone-saturated water at various water pH values of 3, 7, and 9. Ozonation at pH of 9 achieves significantly greater removal of both succinic acid and COD compared to those at neutral or acidic pH values.

The benefits of the disclosed systems and methods include more efficient oxidation of organic impurities in water compared to other treatment systems. Ozone is much stronger oxidation agent than other oxidants used in groundwater remediation, drinking water treatment and wastewater treatments. When ozone gas injected into groundwater, gas-liquid mass transfer often limits the treatment efficiency. This is especially a problem when gas is injected into groundwater where limited means are available to improve the mass transfer. The injection of ozone dissolved in water at high pressure eliminates the mass transfer step, whereby improving reaction kinetics. Combined these factors may lead to more efficient and faster oxidation of groundwater contaminants.

Reference herein to "one embodiment" or "an embodiment" means that a particular feature, structure, or characteristic described in connection with the embodiment may be included in at least one embodiment of the invention. The appearances of the phrase "in one embodiment" in various places in the specification are not necessarily all referring to the same embodiment, nor are separate or alternative embodiments necessarily mutually exclusive of other embodiments. The same applies to the term "implementation."

As used in this application, the word "exemplary" is used herein to mean serving as an example, instance, or illustration. Any aspect or design described herein as "exemplary" is not necessarily to be construed as preferred or advantageous over other aspects or designs. Rather, use of the word exemplary is intended to present concepts in a concrete fashion.

Additionally, the term "or" is intended to mean an inclusive "or" rather than an exclusive "or". That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. In addition, the articles "a" and "an" as used in this application and the appended claims should generally be construed to mean "one or more" unless specified otherwise or clear from context to be directed to a singular form.

The singular forms "a", "an" and "the" include plural referents, unless the context clearly dictates otherwise.

"About" or "around" or "approximately" in the text or in a claim means ±10% of the value stated.

The term "ozone refractive compounds" refer to the compounds that have second order reaction rate constant with ozone less than 1000 mol⁻¹ s⁻¹ such as reaction of hydrogen peroxide (H₂O₂) with ozone in water produces hydroxyl radicals.

"Comprising" in a claim is an open transitional term which means the subsequently identified claim elements are a nonexclusive listing i.e. anything else may be additionally included and remain within the scope of "comprising." "Comprising" is defined herein as necessarily encompassing the more limited transitional terms "consisting essentially of" and "consisting of"; "comprising" may therefore be replaced by "consisting essentially of" or "consisting of" and remain within the expressly defined scope of "comprising".

Ranges may be expressed herein as from about one particular value, and/or to about another particular value. When such a range is expressed, it is to be understood that another embodiment is from the one particular value and/or to the other particular value, along with all combinations within said range. Any and all ranges recited herein are inclusive of their endpoints (i.e., x=1 to 4 or x ranges from 1 to 4 includes x=1, x=4, and x=any number in between), irrespective of whether the term "inclusively" is used.

It will be understood that many additional changes in the details, materials, steps, and arrangement of parts, which have been herein described and illustrated in order to explain the nature of the invention, may be made by those skilled in the art within the principle and scope of the invention as expressed in the appended claims. Thus, the present invention is not intended to be limited to the specific embodiments in the examples given above and/or the attached drawings.

While embodiments of this invention have been shown and described, modifications thereof may be made by one skilled in the art without departing from the spirit or teaching of this invention. The embodiments described herein are exemplary only and not limiting. Many variations and modifications of the composition and method are possible and within the scope of the invention. Accordingly, the scope of protection is not limited to the embodiments described herein, but is only limited by the claims which follow, the scope of which shall include all equivalents of the subject matter of the claims.

## Claims

1. A method for purifying a contaminated groundwater and soil by destroying contaminants or reducing concentrations of the contaminants, the method comprising the steps of:
providing a flow of groundwater flowing through a contaminated region (102, 202) of the contaminated groundwater and soil;
providing at least one first injection points to the flow of the groundwater upstream of the contaminated region (102, 202), wherein the at least one first injection points extend substantially perpendicularly to the flow of the groundwater from above ground to the flow of the groundwater;
generating an ozone-saturated water in an on-site vessel;
injecting the ozone-saturated water from the at least one first injection points into the flow of groundwater, wherein the ozone-saturated water is driven by the flow of the underground water and flows into the contaminated region; and
oxidizing the contaminants contained in the contaminated region by the ozone-saturated water.

2. The method of claim 1, further comprising the steps of:
providing at least one first pump points downstream of the contaminated region (102, 202), wherein the at least one first pump points extend substantially perpendicularly to the flow of the groundwater from above ground to the flow of the groundwater; and
pumping water from the downstream of the contaminated region (102, 202) from the at least one first pump points to the on-site vessel, thereby recycling unused ozone back to the on-site vessel.

3. The method of claim 2, further comprising the steps of:
providing at least one biological treatment system (118) downstream of the at least one first pump points; and
destroying byproducts produced by the oxidization step through at least one biological treatment systems (118) downstream of the at least one first pump points, the byproducts may include partially oxidized or unreacted compounds from the contaminated region (102).

4. The method of claim 3, further comprising the steps of:
providing at least one second injection points to the downstream of the at least one biological treatment systems (118); and
injecting the ozone-saturated water from the at least one second injection points into the downstream of the at least one biological treatment system (118) for disinfection treatment,
wherein the at least one second injection points extend substantially perpendicularly to the flow of the groundwater from above ground to the flow of the groundwater.

5. The method of claim 1, further comprising the step of:
injecting a hydrogen peroxide solution to the ozone saturated water before injecting the ozone-saturated water from the at least one first injection points into the flow of groundwater, wherein a concentration of the hydrogen peroxide solution is approximately 30% and optionally the ratio of hydrogen peroxide to ozone in water ranges from 1:10 to 1:2 g/g.

6. The method of any one of claims 1 to 5, wherein a pressure of the ozone-saturated water generated form the on-site vessel is up to 8 barg and/or a concentration of the ozone-saturated water generated form the on-site vessel is up to approximately 300 mg/L.

7. A method for purification of a process liquid contaminated with organic impurities in water recycle and reuse systems to destroy contaminants or reduce concentrations of contaminants, the method comprising the steps of:
providing a water stream upstream of a contaminated water (302);
generating an ozone-saturated water in an on-site vessel;
adding the ozone-saturated water to the contaminated water (302);
oxidizing the contaminants contained in the contaminated water (302),
wherein the ozone-saturated water is driven by the water stream and flows into the contaminated water (302) to oxidize the contaminants.

8. The method of claim 7, wherein a pressure of the ozone-saturated water generated form the on-site vessel is up to 8 barg.

9. The method of claim 7 or 8, further comprising the step of:
adding a hydrogen peroxide solution to the contaminated water (302) immediately after the oxidization step, wherein a concentration of the hydrogen peroxide solution is approximately 30%, and optionnally a ratio of hydrogen peroxide to ozone in water is in the range from 1:10 to 1:2 g/g.

10. The method of claim 7, 8 or 9, further comprising the step of:
applying a UV light in a wavelength ranging from 250 to 350 nm to the contaminated water (302) after the oxidization step.

11. The method of any of claims 7 to 10, further comprising the step of:
pumping water from downstream of the contaminated water (302) to the on-site vessel, thereby recycling unused ozone back to the on-site vessel.

12. The method of any of claims 7 to 11, further comprising the steps of:
providing at least one biological treatment systems (118) downstream of the contaminated water (302); and
destroying byproducts after a treatment by the ozone-saturated water; and
injecting the ozone-saturated water into the downstream of the at least one biological treatment system (118) for a disinfection treatment.

13. The method of any one of claims 7 to 12, wherein a concentration of the ozone-saturated water generated form the on-site vessel is up to approximately 300 mg/L.

14. A method for remediating a contaminated groundwater and soil by destroying contaminants or reducing concentrations of the contaminants, the method comprising the steps of:
providing a flow of groundwater flowing through a contaminated region (102, 202) of the contaminated groundwater and soil;
providing at least one first injection points extending substantially perpendicularly to the ground from above ground to the flow of groundwater upstream of the contaminated region (102, 202);
generating an ozone-saturated water in an on-site vessel;
injecting the ozone-saturated water from the on-site vessel through the at least one first injection points into the flow of groundwater, wherein the ozone-saturated water is driven by the flow of the groundwater and flows into the contaminated region (102, 202);
adding a solution of hydrogen peroxide into the ozone-saturate water before the ozone-saturated water is injected into the at least one first injection points, wherein a concentration of the hydrogen peroxide solution is approximately 30%;
oxidizing the contaminants contained in the contaminated region (102, 202);
installing at least one biological treatment systems (118) downstream of the contaminated region (102, 202) to destroy byproducts created by the oxidization step;
pumping water downstream of the at least one biological treatment systems (118) to the on-site vessel through at least one first pumping points, thereby recycling unused ozone back to the on-site vessel, wherein the at least one first pumping points extend substantially perpendicularly to the ground from above ground to the downstream of the at least one biological treatment systems; and
applying UV light in a wavelength ranging from 250 to 350 nm to the on-site vessel for further purification.

15. A method for purification of a process liquid contaminated with organic impurities in water recycle and reuse systems to destroy contaminants or reduce concentrations of contaminants, the method comprising the steps of:
forming a water recirculation loop with a pressurized vessel, wherein the process liquid in the pressurized vessel flows out of the pressurized vessel and recycles back to the pressurized vessel by pumping, the pressurized vessel has a pressure up to 8 barg;
generating ozone-saturated water in the pressurized vessel;
adding a solution of hydrogen peroxide to the water recirculation loop, wherein a concentration of the hydrogen peroxide solution is approximately 30%;
adding a UV light to the water recirculation loop, wherein the UV light has a wavelength ranging from 250 to 350 nm;
oxidizing the organic impurities in the process liquid by the combination of ozone-saturated water, hydrogen peroxide and UV light.
